Europäisches Patentamt

European Patent Office

Office européen des brevets

(19)

(11) Veröffentlichungsnummer: **0 023 947**

**A1**

(12) **EUROPÄISCHE PATENTANMELDUNG**

(21) Anmeldenummer: **80102711.1**

(22) Anmeldetag: **16.05.80**

(51) Int. Cl.³: **G 03 B 21/16**

(30) Priorität: **10.08.79 DE 2932484**

(43) Veröffentlichungstag der Anmeldung:
**18.02.81 Patentblatt 81/7**

(84) Benannte Vertragsstaaten:
**AT BE CH FR GB IT LI LU NL SE**

(71) Anmelder: **Rollei-Werke Franke & Heidecke GmbH + Co
KG
Salzdahlumer Strasse 196
D-3300 Braunschweig(DE)**

(72) Erfinder: **Sobotta, Reinhard
Schreiberkamp 9
D-3300 Braunschweig(DE)**

(72) Erfinder: **Prochnow, Claus
Lange Strasse 38
D-3300 Braunschweig(DE)**

(74) Vertreter: **Pretzell, Hellmut, Dipl.-Ing.
Salzdahlumer Strasse 196
D-3300 Braunschweig(DE)**

(54) **Diaprojektor.**

(57) Durch die Erfindung soll Hitzeschaden durch unsachgemäße Bedienung an einem Dia-Projektor (2) mit einer Schutzvorrichtung (1) vermieden werden.

Ein erstes Betätigungsorgan (4) ist mit einer Schutzvorrichtung (1) – in einer besonderen Ausgestaltungsform als Abdeckhaube – so verbunden, daß ein zweites Betätigungsorgan (5) dann mit dem ersten Betätigungsorgan (4) in Kontakt ist, wenn die untere Kante der Schutzvorrichtung (1) kurz vor dem Eintauchen in einen Strahlenkegel (3) liegt.

*Fig.1*

EP 0 023 947 A1

ROLLEI - WERKE
Franke & Heidecke
GmbH & Co KG
Braunschweig

A 1166 EU
09.08.1979

## Diaprojektor

### Anwendungsgebiet
Die Erfindung betrifft einen Diaprojektor unter Verwendung einer Schutzvorrichtung.

### Stand der Technik
Bekannt sind Einrichtungen, die bei unsachgemäßer Bedienung Beschädigung am Gerät durch Hitzestau verhindern sollen, wie z.B. beim elektrischen Heizlüfter, der bei Hitzestau eine thermische Abschaltung hat. Bekannt sind auch Diaprojektoren mit thermischer Abschaltung. Der Nachteil thermischer Abschaltungen ist das träge Ansprechvermögen, besonders bei plötzlich auftretendem Hitzestau, welcher zu Hitzeschaden am Diaprojektor führen kann und darüber hinaus noch zu Hitzeschaden am im Strahlengang eingelegten Dia.

### Aufgabe
Durch die Erfindung soll eine Vorrichtung geschaffen werden, die Hitzeschaden durch unsachgemäße Bedienung an einem Diaprojektor mit einer Schutzvorrichtung weitgehend verhindert.

### Lösung
Diese Aufgabe ist bei einem Diaprojektor der im Oberbegriff des Anspruchs 1 definierten Gattung erfindungsgemäß durch die Merkmale im Kennzeichnungsteil des Anspruchs 1 gelöst.

Bei noch eingeschalteter Projektionslampe werden das Aufsetzen der Schutzvorrichtung auf den Diaprojektor und der dabei entstehende Hitzestau derart verhindert, daß die untere Kante der Schutzvorrichtung kurz vor Eintauchen in den Strahlenkegel mit einem ersten Betätigungsorgan durch eine Sperre gestoppt wird.

In einer weiteren vorteilhaften Ausbildung der Erfindung ist die Sperre mit dem Projektionslampenschalter derart gekoppelt, daß erst bei ausgeschalteter Projektionslampe das Aufsetzen der Schutzvorrichtung abgeschlossen werden kann, wodurch Hitzeschaden sowohl am Diaprojektor als auch darüber hinaus am im Strahlengang eingelegten Dia verhindert wird.

Eine andere vorteilhafte Ausgestaltungsmöglichkeit ist die, daß bei eingeschalteter Projektionslampe das erste Betätigungsorgan einen elektrischen Schalter kurz vor Eintauchen in den Strahlenkegel der unteren Kante der Schutzvorrichtung auslöst, der zwar die Projektionslampe ausschaltet, nicht aber das Kühlgebläse. Dadurch wird eine zusätzliche Sicherheit zur Verhütung des schädlichen Hitzestaus im Diaprojektor und am Dia erreicht.

Eine besonders vorteilhafte Ausführungsform ergibt sich mit einem ersten Betätigungsorgan nahe der Unterkante an der Innenseite der Schutzvorrichtung und einem damit fluchtendes zweites Betätigungsorgan nahe der Oberkante auf der Projektionsseite.

Dadurch wird gewährleistet, daß selbst bei unsachgemäßem, verkantetem Aufsetzen der Schutzvorrichtung auf den Diaprojektor bei eingeschalteter Projektionslampe die untere Kante der Schutzvorrichtung nicht in den Strahlenkegel tauchen kann, daß also die Kontaktübertragung zwischen den beiden Betätigungsorganen kurz vor Eintauchen der unteren Schutzvorrichtungskante in den Strahlenkegel erhalten bleibt.

Figurenbeschreibung

Im folgenden wird ein Ausführungsbeispiel der Erfindung anhand der Zeichnung näher erläutert. Es zeigt

Fig. 1      einen Diaprojektor bei eingeschalteter Projektionslampe und einer noch nicht vollständig aufgesetzten, geschnitten dargestellten Abdeckhaube,

Fig. 2      den Diaprojektor bei vollständig aufgesetzter, geschnitten dargestellter Abdeckhaube, entriegeltem Betätigungsorgan und ausgeschalteter Projektionslampe,

Fig. 3      den in Fig. 2 dargestelltlen Diaprojektor in geschnittener Draufsicht.

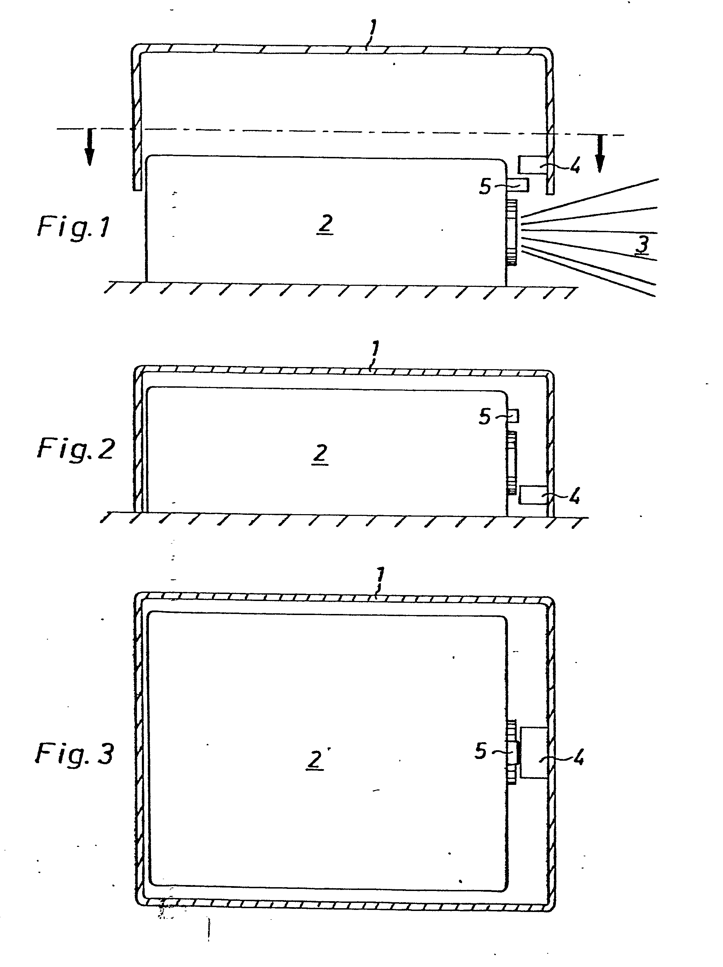

Das dargestellte Ausführungsbeispiel in **Fig. 1** zeigt den durch Handführung in Pfeilrichtung verlaufenden Abdeckweg der Abdeckhaube 1 auf den Diaprojektor 2 . Das Aufsetzen der Abdeckhaube soll wegen der noch eingeschalteten Projektionslampe und des daraus resultierenden Strahlenkegels 3, der besonders intensiv Hitzeschaden hervorrufen kann, verhindert werden. Das an der Abdeckhaube 1 angeordnete Betätigungsorgan 4 sperrt den weiteren Abdeckweg durch Betätigungsorgan 5, wobei Betätigungsorgan 5 in dieser Ausbildungsform ein mechanisch sperrender elektrischer Schalter ist.

Um den Abdeckvorgang mit der geschnitten dargestellten Abdeckhaube 1 vollenden zu können, muß von Hand das Betätigungsorgan 5 in die Position gemäß _Fig. 2_ gebracht werden. Dabei wird die Projektionslampe (nicht dargestellt) ausgeschaltet und die mechanische Sperre zwischen den beiden Betätigungsorganen 4,5 aufgehoben. Die Abdeckhaube 1 kann nun, ohne Hitzeschaden am Diaprojektor zu verursachen, ungehindert an der Sperre vorbei vollständig aufgesetzt werden. Durch eine geeignete Anordnung der beiden Betätigungsorgane 4,5 bleibt auch bei verkantetem Aufsetzen der Abdeckhaube 1 ihre gemeinsame Funktion erhalten, indem das Betätigungsorgan 4 nahe der Unterkante an der Innenseite der Abdeckhaube 1 und das damit fluchtende Betätigungsorgan 5 nahe der Oberkante auf der Projektionsseite angeordnet ist.

Aus _Fig. 3_ geht weiter aus einer geschnittenen Draufsicht die Lage als mechanisch sperrender Schalter hervor.

Die Erfindung ist nicht auf das dargestellte Beispiel beschränkt. So kann z. B. das Betätigungsorgan 5 als Reed-Relais und das Betätigungsorgan 4 als Permanentmagnet ausgebildet sein. Das Betätigungsorgan 4 löst dann durch sein Magnetfeld in der Nähe des Betätigungsorgans 5 den Reed-Relaiskontakt aus. Vorteilhaft hierbei ist, daß kein mechanischer Verschleiß auftritt.

In einer weiteren Ausbildungsmöglichkeit ist für das Betätigungsorgan 5 ein photoelektrischer Wandler und für das Betätigungsorgan 4 ein Reflektor einsetzbar. Auch hierbei ist die Funktion ohne mechanischen Verschleiß von Vorteil.

RÖLLEI-WERKE
Franke & Heidecke
GmbH & Co KG                    A 1166 EU
Braunschweig                    09.08.1979

Patentansprüche

1. Diaprojektor mit einer Schutzvorrichtung, dadurch gekennzeichnet, daß ein Betätigungsorgan (4) mit der Schutzvorrichtung (1) verbunden ist, daß der Diaprojektor (2) ein Betätigungsorgan (5) aufweist und daß beide Betätigungsorgane (4,5) so angeordnet sind, daß sie in der Position des Abdeckweges der Schutzvorrichtung in Kontakt sind, bei der sich die untere Kante der Schutzvorrichtung (1) kurz vor dem Eintauchen in einen Strahlenkegel (3) befindet.

2. Diaprojektor nach Anspruch 1, dadurch gekennzeichnet, daß die Schutzvorrichtung (1) die Form einer Abdeckhaube aufweist.

3. Diaprojektor nach Anspruch 1, dadurch gekennzeichnet, daß das Betätigungsorgan (4) mit dem Betätigungsorgan (5) mechanisch in Kontakt ist.

4. Diaprojektor nach Anspruch 3, dadurch gekennzeichnet, daß das Betätigungsorgan (5) eine mechanische Sperre ist.

5. Diaprojektor nach Anspruch 1 und 3, dadurch gezeichnet, daß das Betätigungsorgan (5) ein elektrischer Schalter ist.

6. Diaprojektor nach Anspruch 1, dadurch gekennzeichnet, daß das Betätigungsorgan (5) ein elektromagnetischer Schalter ist.

7. Diaprojektor nach Anspruch 1, dadurch gekennzeichnet, daß das Betätigungsorgan (5) ein photoelektrischer Wandler ist.

8. Diaprojektor nach Anspruch 5 bis 7, dadurch gekennzeichnet, daß die Projektionslampe über dem Betätigungsorgan (5) in Aus-Stellung bringbar ist, während das Kühlgebläse weiterhin in Ein-Stellung bleibt.

9. Diaprojektor nach Anspruch 1, gekennzeichnet durch ein Betätigungsorgan (4) nahe der Unterkante an der Innenseite der Schutzvorrichtung (1) und ein damit fluchtendes Betätigungsorgan (5) nahe der Oberkante auf der Projektionsseite.

Fig.1

Fig.2

Fig.3

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 2 001 847 (LEITZ) <br> * Gesamt * <br> -- | 1,2,5,9 |
| | GB - A - 1 527 690 (ROLLEI) <br> * Gesamt * <br> -- | 1,2 |
| | DE - C - 841 269 (ZEISS) <br> * Gesamt * <br> -- | 1,5 |
| A | US - A - 3 653 754 (CABIN) <br> * Fig. 1,3,4,7; Spalte 3, Zeilen 3-48; Ansprüche 1,2 * <br> -- | |
| A | US - A - 3 619 048 (ENNA WERK) <br> * Gesamt * <br> -- | 1,2 |
| A | DE - A1 - 2 811 045 (BELL & HOWELL) <br> * Ansprüche 8,9; Fig. 1,2; Seite 16, letzter Absatz bis Seite 18, Absatz 2 * <br> ---- | 1 |

**KLASSIFIKATION DER ANMELDUNG (Int. Cl.³)**

G 03 B 21/16

**RECHERCHIERTE SACHGEBIETE (Int. Cl.³)**

G 03 B 21/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| WIEN | 17-10-1980 | GRONAU |

EPA form 1503.1   06.78